# EUROPÄISCHE PATENTANMELDUNG

(11) **EP 0 909 107 A2**
(43) Veröffentlichungstag der Anmeldung: **14.04.1999**
(21) Anmeldenummer: 98119159.6
(22) Anmeldetag: 09.10.1998
(51) Int. Cl.: H04Q 11/04

(54) **Verfahren zum Vermitteln von Anrufen von einem Kommunikationssystem über ein Zubringernetz an angeschlossene Kommunikationsendgeräte**

(30) Priorität: 09.10.1997 DE 19744627
(71) Anmelder: SIEMENS AKTIENGESELLSCHAFT, 80333 München (DE)
(72) Erfinder: Müller, Hans, 81373 München (DE); Morper, Hans-Jochen, 85253 Erdweg (DE)

(57) **Zusammenfassung**

Im Zubringernetz (AN) wird die Nicht-Verfügbarkeit der angeschlossenen Kommunikationsendgeräte (KE) ermittelt und bei einem Verbindungsaufbau vom Kommunikationsnetz (KN) zum Zubringernetz (AN) wird bei einem adressierten, nicht verfügbaren Kommunikationsendgerät (KE) eine dessen Nicht-Verfügbarkeit anzeigende Information (nvi) vom Zubringernetz (AN) an das Kommunikationssystem (LE) übermittelt. Hierdurch wird die Wartezeit des rufenden Teilnehmers verkürzt und die dynamische Belastung des Kommunikationsnetzes (KN) einschließlich des Zubringernetzes (AN) reduziert.

## Beschreibung

In derzeitigen Kommunikationsnetzen, insbesondere öffentlichen Fernsprech- oder dienstintegrierenden Kommunikationsnetzen - in der Fachwelt mit PSTN oder ISDN bezeichnet -, sind Teilnehmer bzw. deren Kommunikationsendgeräte über Zubringernetze an ein Kommunikationssystem herangeführt. Im Zubringernetz können die Kommunikationsendgeräte über optische oder drahtgebundene oder Funkverbindungen angeschlossen werden. Bei einem Anschluß über Funkverbindungen sind die Kommunikationsendgeräte über Leitungen mit Netzanschlußeinheiten - in der Fachwelt als Cordless Termination Adapter bezeichnet - verbunden, die über Funkstrecken bzw. Funkverbindungen drahtlos an eine Basisstation angeschlossen sind. Derartige Anschlußkonzepte sind als RLL-Systeme (Radio Local Loop) oder WLL-Systeme (Wireless Local Loop) bekannt. Die Funkverbindungen sind überwiegend gemäß einem standardisierten DECT- oder CDMA-Übertragungsverfahren realisiert. Desweiteren können die Kommunikationsendgeräte als mobile Kommunikationsendgeräte ausgestaltet sein, die drahtlos an Basisstationen im Zubringernetz angeschlossen sind.

Für den Anschluß des Zubringernetzes an ein Kommunikationssystem eines Kommunikationsnetzes ist eine V5-Schnittstelle standardisiert, wobei als physikalischer Anschluß zumindest eine 2048 kbit/s-Verbindung vorgesehen ist. Wird von einem Kommunikationsendgerät des Kommunikationsnetzes ein Anruf zu einem im Zubringernetz angeschlossenen Kommunikationsendgerät initialisiert, so wird nach einer vorhergehenden Verbindungsaufbauprozedur im Kommunikationsnetz bzw. im Kommunikationssystem ein Verbindungsaufbau im betroffenen Zubringernetz eingeleitet. Gemäß der standardisierten V5-Schnittstelle wird der Verbindungsaufbau durch eine Establish-Meldung eingeleitet, die vom Kommunikationssystem über die V5-Schnittstelle an das Zubringernetz übermittelt wird. Das Zubringernetz bestätigt die Establish-Meldung durch eine Establish-Acknowledge-Meldung, wobei der Verbindungsaufbau zu dem betroffenen, d.h. durch die Ziel-Rufnummer adressierten Kommunikationsendgerät im Zubringernetz durchgeführt ist. In Zubringernetzen führen insbesondere störanfälligerere Funkstrecken zu Blockierungen, bei denen ein oder mehrere Kommunikationsendgeräte im Zubringernetz nicht mehr verfügbar bzw. nicht mehr erreichbar sind. Treten derartige Blockierungen im Zubringernetz auf, wird gemäß dem V5-Standard eine vorgegebene Zeitspanne auf die Establish-Acknowledge-Meldung gewartet und anschließend die Prozedur, d.h. erneutes Übermitteln einer Establish Meldung an das Zubringernetz wiederholt. Der Verbindungsaufbau kann bei den beim V5-Standard vorgesehenen Überwachungszeiten bis zu vier Sekunden verzögert werden, d.h. der rufende Teilnehmer bzw. das rufende Kommunikationsendgerät erhält in dieser Zeitspanne keine Information über die Nicht-Verfügbarkeit bzw. Nicht-Erreichbarkeit des gerufenen Kommunikationsendgerätes. Eine derartige Verzögerung führt zu einer erheblichen zusätzlichen dynamischen Belastung des Kommunikationsnetzes bzw. der darin implementierten Kommunikationssysteme, da der Verbindungsaufbau in den betroffenen Kommunikationssystemen behandelt, d.h. die entsprechenden Signalierungszustände gehalten bzw. zwischengespeichert und bearbeitet werden müssen.

Die der Erfindung zugrundeliegende Aufgabe besteht darin, insbesondere bei im Zubringernetz auftretenden Blockierungen, insbesondere die im V5-Standard vorgesehene Verbindungsaufbauprozedur zu verbessern. Die Aufgabe wird durch die Merkmale des Patentanspruchs 1 gelöst.

Der wesentliche Aspekt des erfindungsgemäßen Verfahrens ist darin zu sehen, daß im Zubringernetz die Verfügbarkeit der angeschlossenen Kommunikationsendgeräte ermittelt wird, und bei einem Verbindungsaufbau vom Kommunikationsnetz zum Zubringernetz wird bei adressierten, nicht verfügbarem Kommunikationsendgerät eine dessen Nicht-Verfügbarkeit anzeigende Information vom Zubringernetz an das Kommunikationssystem übermittelt. Der wesentliche Vorteil des erfindungsgemäßen Verfahrens stellt die umgehende Informierung des Kommunikationsnetzes bzw. des Kommunikationssystems über die Nicht-Verfügbarkeit bzw. Nicht-Erreichbarkeit des adressierten Kommunikationsendgerätes dar, wodurch zum einen die Wartezeit des rufenden Teilnehmers verkürzt und zum anderen die dynamische Belastung des Kommunikationsnetzes einschließlich des Zubringernetzes reduziert wird. Vorteilhaft wird nach Empfang einer die Nicht-Verfügbarkeit anzeigende Information im Kommunikationssystem der Verbiundungsaufbau für den jeweiligen Anruf beendet oder umgeleitet - Anspruch 2. Bei einer Umleitung des Anrufs an beispielsweise ein anderes Kommunikationsendgerät oder eine spezielle Anrufbeantwortungseinrichtung tritt zwar keine aktuelle Reduzierung der dynamischen Belastung des Kommunikationsnetzes ein, jedoch kann der Anruf erfolgreich im Sinne des rufenden Teilnehmers abgeschlossen werden.

Gemäß einer vorteilhaften Weiterbildung des erfindungsgemäßen Verfahrens sind die die Nicht-Verfügbarkeit und eine die Verfügbarkeit des jeweiligen, adressierten Kommunikationsendgerätes anzeigende Information in eine vom Zubringernetz an das Kommunikationssystem gerichtete Verbindungsaufbau-Bestätigungsmeldung eingefügt - Anspruch 3. Hierbei werden insbesondere bereits benutzte gerichtete Verbindungsaufbau-Bestätigungsmeldungen dahingehend ergänzt, daß zusätzlich die die Nicht-Verfügbarkeit und eine die Verfügbarkeit des jeweiligen, adressierten Kommunikationsendgerätes anzeigende Information eingefügt werden. Dies stellt eine Realisierung mit geringstem zusätzlichen schaltungs- und programmtechnischen Aufwand dar.

Vorteilhaft ist eine die Nicht-Verfügbarkeit anzeigende Information durch eine die Ursache der Nicht-Verfügbarkeit des jeweiligen Kommunikationsendgerätes anzeigende Information und eine die Verfügbarkeit anzeigende Information durch eine Erreichbarkeitsinformation repräsentiert - Anspruch 4. Die die Ursache der Nicht-Verfügbarkeit des jeweiligen Kommunikationsendgerätes angegebene Information ist vorteilhaft durch eine eine Überlastung des Zubringernetzes anzeigende Überlastinformation oder durch eine die Nicht-Erreichbarkeit des adressierten Kommunikationsendgerätes anzeigende Nicht-Erreichbarkeitsinformation oder durch eine die Belegung des adressierten Kommunikationsendgerätes anzeigende Belegtinformation repräsentiert - Anspruch 5. Durch diese Maßnahmen wird der Grund der Nicht-Verfügbarkeit oder Nicht-Erreichbarkeit des adressierten Kommunikationsendgerätes dem Kommunikationssystem mitgeteilt und in diesem können Rückschlüsse auf die Art und die Dauer der Verfügbarkeit gezogen werden. Hierdurch kann ggfs. eine schnellere Beseitigung einer Störung im Zubringernetz erreicht werden.

Weitere vorteilhafte Ausgestaltungen des erfindungsgemäßen Verfahrens, insbesondere eine erfindungsgemäß weitergebildete V5-Schnittstelle sind den weiteren Patentansprüchen zu entnehmen.

Im folgenden wird das erfindungsgemäße Verfahren anhand zweier Blockschaltbilder erläutert. Dabei zeigen
- Figur 1: eine erfindungsgemäße Kommunikationsnetz-Struktur und
- Figur 2: die Sturktur einer erfindungsgemäß ergänzten Establish-Acknowledge-Meldung.

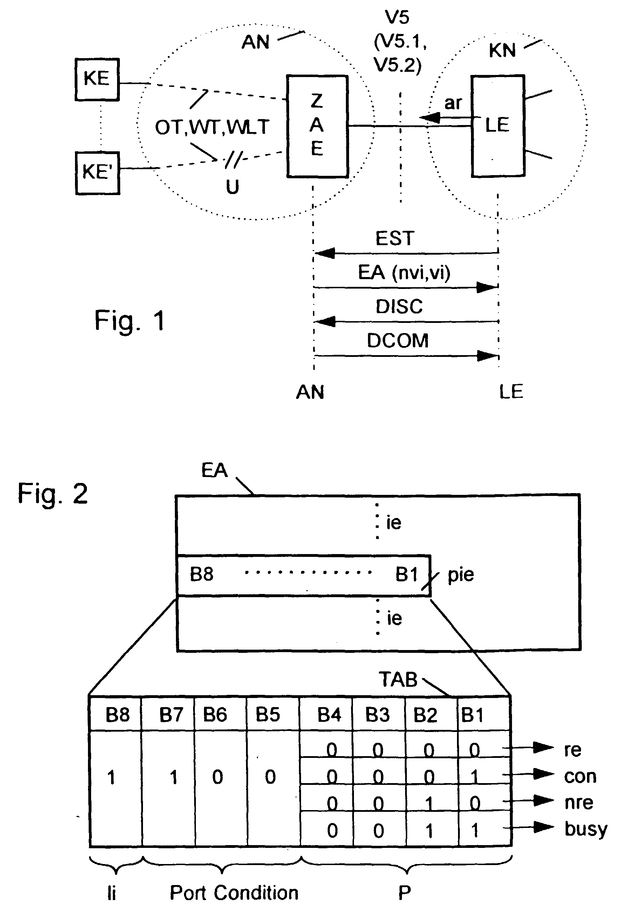

Figur 1 zeigt in einem Blockschaltbild ein Kommunikationsnetz KN - durch einen mit KN bezeichneten punktierten Kreis angedeutet, in dem beispielhaft ein Kommunikationssystem LE dargestellt ist. Das Kommunikationssystem LE ist je nach Größe des Kommunikationsnetzes KN mit weiteren nicht dargestellten Kommunikationssystemen verbunden. Das Kommunikationsnetz KN kann ein öffenliches Fernsprechnetz PSTN oder ein diensteintegrierendes Kommunikationsnetz ISDN oder ein Mobil-Kommunikationsnetzes sein - im Blockschaltbild durch die Bezeichnungen PSTN,ISDN,PLMN angedeutet. Desweiteren zeigt Figur 1 ein durch einen mit AN bezeichneten punktierten Kreis dargestelltes Zubringernetz AN, an das Kommunikationsendgeräte KE - Fernsprech- oder ISDN-Kommunikationsendgeräte - angeschlossen sind. Im Zubringernetz AN ist eine zentrale Anschlußeinrichtung ZAE angeordnet, die mit dem Kommunikationssystem LE verbunden ist. An die zentrale Anschlußeinrichtung ZAE sind die Kommunikationsendgeräte KE über optische, leitungsgebundene oder Funkübertragungsstrecken - im Blockschaltbild durch mit OT, WT, WLT bezeichnete strichlierte Linien angedeutet - geführt, wobei die zentrale Anschlußeinrichtung ZAE entsprechend der verwendeteten Übertragungsstrecken OT,WT,WLT ausgestaltet ist. Für die Verbindung mit dem Kommunikationssystem LE ist in diesem und in der zentralen Anschlußeinrichtung ZAE eine V5-Schnittstelle V5 realisiert. Die standardisierte V5 - Schnittstelle V5 kann entweder als V5.1- oder als V5.2-Schnittstelle realisiert sein, wobei die V5.1-Schnittstelle eine 2048 kbit/s-Verbindung und die V5.2-Schnittstelle eine oder mehrere 2048 kbit/s-Verbindungen aufweist - in Figur 1 durch in Klammern gesetzte Bezeichnung V5.1,V5.2 angedeutet. Desweiteren ist für die V5.2 - Schnittstelle eine verkehrskonzentrierende Funktion vorgesehen, d.h. es sind mehr Kommunikationsendgeräte KE an das Zubringernetz AN anschließbar als gleichzeitig über die V5.2-Schnittstelle vermittelt werden können. Die V5-Schnittstelle V5 ist bis auf die nachfolgend erläuterte erfindungsgemäße Ausgestaltung hinsichtlich der physikalischen und prozeduralen Eigenschaften gemäß dem ETSI-Standard V5.1 oder V5.2 ausgestaltet.

Beim Ausführungsbeispiel sei angenommen, daß von einem nicht dargestellten Kommunikationsendgerät des Kommunikationsnetzes KN ein Anruf - in Figur 1 durch einen mit ar bezeichneten Pfeil angedeutet - vorliegt und eine Verbindung zu einem an das Zubringernetz AN angeschlossenen Kommunikationsendgerät KE' aufgebaut werden soll, wobei das betreffende Kommunikationsendgerät KE' durch eine Ziel-Rufnummer adressiert, d.h. bestimmt ist. Zur Erläuterung des weiteren Signalisierungsauflaufs ist in Figur 1 unterhalb des Kommunikationssystem LE und der zentralen Anschlußeinrichtung ZAE eine strichpunktierte Linie angegeben, die das Kommunikationssystem LE bzw. das Zubringernetz AN repräsentiert.

Vom Kommunikationssystem LE wird eine Establish-Meldung EST an das Zubringernetz AN übermittelt, um in diesem einen Verbindungsaufbau zwischen der V5-Schnittstelle V5 und dem adressierten Kommunikationsendgerät KE' einzuleiten. Üblicherweise wird ein Erreichen des adressierten Kommunikationsendgerätes KE' durch eine Establish-Acknowledge-Meldung EA quittiert und der Verbindungsaufbau weitergeführt. Beim Ausführungsbeispiel sei angenommen, daß das adressierte Kommunikationsendgerät KE' beispielsweise aufgrund einer gestörten Funkübertragungsstrecke WLT nicht verfügbar bzw. nicht erreichbar ist - in Figur 1 ist die Störung durch mit U bezeichnete paralelle Linien angedeutet. Gemäß der Erfindung wird im Zubringernetz AN die Nicht-Verfügbarkeit des adressierten Kommunikationsendgerätes KE' ermittelt bzw. aufgrund der implementierten Überwachungsprozeduren festgestellt und in die Establish-Acknowledge-Meldung EA eine die Nicht-Verfügbarkeit anzeigende Information nvi eingefügt - durch in Klammern gesetzte Bezeichnung nvi angedeutet - und an das Kommunikationssystem LE übermittelt. Von diesem wird daraufhin beispielsweise der Verbindungsaufbau abgebrochen bzw. der Anruf ar als nicht vermittelbar zurückgewiesen. Der Abbruch wird V5-schnittstellen-gemäß durch eine Disconnet-Meldung DISC vom Kommunikationssystem LE eingeleitet und vom Zubringernetz AN durch ein Disconnect Complete-Meldung DCOM bestätigt. Zusätzlich ist im Kommunikationsnetz KN eine nicht dargestellte Umleitung des Anrufs ar möglich.

Die Einfügung einer die Nicht-Verfügbarkeit des adressierten Kommunikationsendgerätes KE' anzeigende Information nvi in eine Establish-Acknowledge-Meldung EA ist in Figur 2 dargestellt. Die Establish-Acknowledge-Meldung EA ist üblicherweise durch Informationselemente ie gemäß dem V5-Standard gebildet, beispielsweise L3-Adress- und Message Type-Informationselement. Erfindungsgemäß ist ein zusätzliches Informationselement ie vorgesehen, das beispielhaft als Port Condition-Informationselement pie definiert ist. Dieses umfaßt V5-standardgemäß beispielsweise acht Bit B1..B8 - könnte bei Bedarf auch mehrere Oktetts bzw. Bytes umfassen.

Die Bedeutung der einzelenen Bits B1..B8 wird anhand der in Figur 2 dargestellten Tabelle TAB erläutert. Im fünften bis siebenten Bit B5,B6,B7 ist der Name bzw. die Definition 'Port Condition' des Informationselementes pie in codierter Form eingetragen - im Ausführungsbeispiel definiert die Bitkombination 001 das zusätzliche Informationselement pie als Port Condition-Informationselement pie. Das achte Bit B8 des Port-Condition-Informationselementes pie zeigt seine Oktett- bzw. Bytelänge an. Im Ausführungsbeispiel ist als Längeninformation li eine '1' eingetragen, wodurch die Länge des Port-Condition-Informationselementes pie mit einem Byte bestimmt ist. Bei einer Längeninformation '0' umfaßt ein Informationselement ie mehrere Bytes, wobei deren Anzahl im folgenden Byte angegeben ist - nicht dargestellt, da beim Ausführungsbeispiel von einer Länge des Port-Condition-Informationselementes pie von einem Byte ausgegangen wird.

Dem ersten bis vierten Bit B1.. des Port-Condition-Informationselementes pie sind unterschiedliche Parameter P zuordenbar, die entweder einzeln den jeweiligen Bits B1..B4 oder in codierter Form, d.h. als 4-Bit-Kombination, dem ersten bis vierten Bit B1..B4 zugeordnet werden. Durch diese Parameter P werden erfindungsgemäß die Ursachen für eine Nicht-Verfügbarkeit sowie eine die Verfügbarkeit des adressierten Kommunikationsendgerätes KE' angegeben, wobei die Angabe in codierter Form, d.h. durch 4-Bit-Kombinationen erfolgt.

Die Codierung bzw. Bitkombination 0000 repräsentiert eine Erreichbarkeitsinformation re, durch die dem Kommunikationssystem LE die Erreichbarkeit des adressierten Kommunikationsendgerätes KE' angezeigt wird. Die Codierung bzw. Bitkombination 1000 repräsentiert eine Überlastinformation con, durch die dem Kommunikationssystem LE die Überlastung des Zubringernetzes AN und eine damit verbundene Nicht-Verfügbarkeit des adressierten Kommunikationsendgerätes KE' angezeigt wird. Die Codierung bzw. Bitkombination 0100 repräsentiert eine Nicht-Erreichbarkeitsinformation nre, durch die dem Kommunikationssystem LE eine Nichterreichbarkeit des adressierten Kommunikationsendgerätes KE' angezeigt wird. Eine Nicht-Erreichbarkeit des adressierten Kommunikationsendgerätes KE' liegt beispielsweise bei einem ausgeschalteten, mobilen, adressierten Kommunikationsendgerät KE vor. Die Codierung bzw. Bitkombination 1100 repräsentiert eine Belegtinformation busy, durch die dem Kommunikationssystem LE eine interne Belegung des adressierten Kommunikationsendgerätes KE' angezeigt wird. Eine interne Belegung des adressierten Kommunikationsendgerätes KE' kann beispielsweise bei einer fehlenden Bereitschaft des Kommunikationsendgerätes KE aufgrund von internen Tests oder anderen wichtigen Funktionsabläufen oder auch bei Internverkehr zwischen Kommunikationsendgeräten KE des Zubringernetzes AN vorliegen.

Anstelle der vorhergehend erläuterten Codierungen können andere Bitkombinationen für die jeweiligen Informationen und auch andere Strukturen der erfindungsgemäßen Verbindungsaufbau-Meldung vom Zubringernetz AN zum Kommunikationssystem LE vorgesehen werden, die auf eine vorhandene Schnittstelle zwischen dem Zubringernetz AN und dem Kommunikationssystem LE abgestimmt sind. Derartige Schnittstellen sind beispielsweise die bekannten analogen Fernsprechschnittstellen - a/b-Schnittstellen - oder die bekannten zeitmultiplexstrukturierten PCM-Schnittstellen, beispielsweise PCM-30-Schnittstellen, sowie die bekannten Basic Access- und Primary Rate Access-Schnittstellen in ISDN-Kommunikationsnetzen, d.h. das erfindungsgemäße Verfahren ist universell für Schnittstellen zwischen einem Zubringernetz AN und einem Kommunikationssystem LE eines Kommunikationsnetzes KN einsetzbar.

## Patentansprüche

1. Verfahren zum Vermitteln von Anrufen (ar) von einem Kommunikationssystem (KS) über ein Zubringernetz (AN) an angeschlossene Kommunikationsendgeräte (KE),
- bei dem im Zubringernetz (AN) die Verfügbarkeit der angeschlossenen Kommunikationsendgeräte (KE) ermittelt wird,
- bei dem bei einem Verbindungsaufbau vom Kommunikationsnetz (KN) zum Zubringernetz (AN) bei adressierten, nicht verfügbarem Kommunikationsendgerät (KE) eine dessen Nicht-Verfügbarkeit anzeigende Information (nvi) vom Zubringernetz (AN) an das Kommunikationssystem (LE) übermittelt wird.

2. Verfahren nach Anspruch 1,
**dadurch gekennzeichnet,**
daß im Kommunikationssystem (KS) nach Empfang einer die Nicht-Verfügbarkeit anzeigenden Information (nvi) der Verbindungsaufbau für den jeweiligen Anruf (ar) beendet oder umgeleitet wird.

3. Verfahren nach Anspruch 1 oder 2,
**dadurch gekennzeichnet,**
daß die die Nicht-Verfügbarkeit und eine die Verfügbarkeit des jeweiligen, adressierten Kommunikationsendgerätes (KE) anzeigende Information (nvi,vi) in eine vom Zubringernetz (AN) an das Kommunikationssystem (KS) gerichtete Verbindungsaufbau-Bestätigungsmeldung (EA) eingefügt sind.

4. Verfahren nach einem der Ansprüche 1 bis 3,
**dadurch gekennzeichnet,**
daß eine die Nicht-Verfügbarkeit anzeigende Information (nvi) durch eine die Ursache der Nicht-Verfügbarkeit des jeweiligen Kommunikationsendgerätes (KE) anzeigende Information (con, nre,busy) und eine die Verfügbarkeit anzeigende Information (vi) durch eine Erreichbarkeitsinformation (re) repräsentiert ist.

5. Verfahren nach Anspruch 4,
**dadurch gekennzeichnet,**
daß die die Ursache der Nicht-Verfügbarkeit des jeweiligen Kommunikationsendgerätes (KE) angegebene Information (nvi)
- durch eine eine Überlastung des Zubringernetzes (AN) anzeigende Überlastinformation (con), oder
- durch eine die Nicht-Erreichbarkeit des adressierten Kommunikationsendgerätes (KE) anzeigende Nicht-Ereichbarkeitsinformation (nre) oder
- durch eine die Belegung des adressierten Kommunikationsendgerätes (KE) anzeigende Belegtinformation (busy)
repräsentiert ist.

6. Verfahren nach einem der Ansprüche 1 bis 5,
**dadurch gekennzeichnet,**
daß eine Schnittstelle zwischen dem Zubringernetz (AN) und dem Kommunikationssystem (KS) als analoge Fernsprechschnittstelle oder als zeitmultiplexorienterte, PCM-orientierte Fernsprechschnittstelle oder als ISDN-Schnittstelle realisiert ist.

7. Verfahren nach einem der Ansprüche 1 bis 6,
**dadurch gekennzeichnet,**
daß das Zubringernetz (AN) über eine V5-Schnittstelle (V5) mit dem Kommunikationssystem (KS) verbunden ist und die die Nicht-Verfügbarkeit und die die Verfügbarkeit anzeigende Information (nvi,vi) V5-schnittstellenkonform gebildet sind.

8. Verfahren nach Anspruch 7,
**dadurch gekennzeichnet,**
daß die die Nicht-Verfügbarkeit und die die Verfügbarkeit anzeigende Information (nvi,vi) in ein zusätzliches Informationselement (pie) in der vom Zubringernetz (AN) zum Kommunikationssystem (LE) gerichteten 'Establish Acknowledge' - Nachricht (EA) eingefügt ist.

9. Verfahren nach Anspruch 8,
**dadurch gekennzeichnet,**
daß durch eine Codierung des fünften bis siebenten Bit (B5, B6,B7) des zusätzlichen, acht Bit umfassenden Informationselementes (pie) dieses als 'Port Condition'-Informationselement (pie) definiert ist und durch eine Codierung des ersten bis vierten Bit (B1..B4) die Ursache der Nicht-Verfügbarkeit sowie die Verfügbarkeit des jeweiligen Kommunikationsendgerätes (KE) angegeben ist.

10. Verfahren nach Anspruch 9,
**dadurch gekennzeichnet,**
daß das fünfte bis siebente Bit (B5,B6,B7) durch eine 001-Bitkombination codiert ist.

11. Verfahren nach Anspruch 9 oder 10,
**dadurch gekennzeichnet,**
daß im ersten bis vierten Bit (B1..B4)
- die Überlastinformation (con) durch eine 1000-Bitkombination,
- die Nicht-Ereichbarkeitsinformation (nre) durch eine 0100-Bitkombination,
- die Belegtinformation (busy) durch eine 1100-Bitkombination und
- die Ereichbarkeitinformation (re) durch eine 0000-Bitkombination
codiert ist.
